# EUROPÄISCHE PATENTANMELDUNG

(11) **EP 2 641 757 A1**
(43) Veröffentlichungstag der Anmeldung: **25.09.2013**
(21) Anmeldenummer: 13160108.0
(22) Anmeldetag: 20.03.2013
(51) Int. Cl.: B60C 23/04, G01L 19/14

(54) **Gehäuse für mindestens einen Drucksensor**

(30) Priorität: 21.03.2012 DE 102012006129
(71) Anmelder: i2s Intelligente Sensorsysteme Dresden GmbH, 01109 Dresden (DE)
(72) Erfinder: Zacharias, Stefan, 01328 Dresden (DE)
(74) Vertreter: Pfenning, Meinig & Partner GbR

(57) **Zusammenfassung**

Die Erfindung betrifft ein Gehäuse für mindestens einen Drucksensor, der zur Bestimmung des Druckes von Pneumatikanlagen, insbesondere Bremsanlagen von Fahrzeugen eingesetzt werden kann. Bei dem erfindungsgemäßen Gehäuse ist an einem Trägerelement (1) an dem ein plattenförmiges Element, ein Drucksensor angebracht ist, befestigt. Von einem Druckluftanschluss ist ein Kanal (8) bis zum plattenförmigen Element geführt. Dabei ist das Trägerelement form- und stoffschlüssig mit einem Deckelelement (2) gasdicht verbunden und das Deckelelement (2) kann mit einer Baugruppe der Pneumatik-anlage mittels Schraubverbindung an mindestens zwei Positionen befestigt werden. Zur Durchführung von Schrauben ist jeweils für eine Schraube ein Durchbruch im Deckelelement (2)ausgebildet und die Grundfläche des Deckelelements sowie Bereiche der Grundfläche des Trägerelements (1) sind fluchtend zueinander ausgerichtet. Die Grundfläche des Deckelelements ist mit den fluchtend ausgerichteten Bereichen der Grundfläche des Trägerelements gemeinsam mittels der Schraubverbindung gegen die Oberfläche der jeweiligen Baugruppe der Pneumatikanlage vorgespannt befestigt.

## Beschreibung

Die Erfindung betrifft ein Gehäuse für mindestens einen Drucksensor, der zur Bestimmung des Druckes von Pneumatikanlagen, insbesondere Bremsanlagen von Fahrzeugen eingesetzt werden kann. Bevorzugt handelt es sich dabei um eine technische Lösung mit zwei Drucksensoren, mit denen an zwei Positionen eine Druckbestimmung oder eine Differenzdruckbestimmung durchgeführt werden kann.

In solchen Pneumatikanlagen herrschen erhöhte Innendrücke, die auch häufig wechseln. Bei dem üblicherweise eingesetzten Messprinzip, bei dem der Innendruck über die Verformung eines elastisch verformbaren Elements bestimmt wird, besteht die Gefahr einer Leckage der jeweiligen Pneumatikanlage, wenn ein zur Druckbestimmung eingesetztes elastisch verformbares Element zerstört wird. Bei einer solchen Zerstörung ist daher ein zusätzlicher Schutz vor einer Leckage erforderlich, um die Betriebssicherheit der Pneumatikanlage zu gewährleisten, was bei pneumatischen Bremsanlagen, wegen des Sicherheitsaspektes besondere Bedeutung hat. Herkömmliche Lösungen weisen in diesem Punkt noch erhebliche Defizite auf, so dass dieses Problem bisher nicht zufrieden stellend gelöst worden ist.

Es ist daher Aufgabe der Erfindung, Möglichkeiten anzugeben, mit denen die negative Wirkung einer Leckage im Bereich der Druckbestimmung an einer Pneumatikanlage eines Fahrzeugs vermieden, zumindest aber in ihrer Wirkung erheblich abgeschwächt werden kann.

Erfindungsgemäß wird diese Aufgabe, mit einem Gehäuse, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Das erfindungsgemäße Gehäuse besteht aus einem Trägerelement, das mit einem Deckelelement verbunden ist. Dabei ist mindestens ein Drucksensor, zur Bestimmung des Druckes in Pneumatikanlagen von Fahrzeugen, an einem plattenförmigen Element angebracht und das plattenförmige Element ist am Trägerelement befestigt.

Außerdem ist von einem Druckluftanschluss ein Kanal bis zum plattenförmigen Element geführt.

Das Trägerelement und das Deckelelement sind form- und stoffschlüssig sowie gasdicht miteinander verbunden. Dabei kann das Deckelelement mit einer Baugruppe der Pneumatikanlage mittels Schraubverbindung an mindestens zwei Positionen befestigt werden; wobei
zur Durchführung von Schrauben jeweils für eine Schraube ein Durchbruch im Deckelelement ausgebildet ist und die Grundfläche des Deckelelements sowie Bereiche der Grundfläche des Trägerelements fluchtend zueinander ausgerichtet sind. Die Grundfläche des Deckelelements kann so mit den fluchtend ausgerichteten Bereichen der Grundfläche des Trägerelements gemeinsam mittels der Schraubverbindung gegen die Oberfläche der jeweiligen Baugruppe der Pneumatikanlage vorgespannt befestigt werden.

Trägerelement und Deckelelement sind bevorzugt aus einem Polymer hergestellt, was durch Kunststoffspritzgießen erfolgen kann.

Durch die Schraubverbindung können sowohl das Deckelelement, wie auch das Trägerelement gemeinsam und mit gleicher Kraft bzw. gleichem Moment gegen die Auflagefläche an der Pneumatikbaugruppe vorgespannt werden.

Bevorzugt ist dabei durch jeweils einen Durchbruch ein hülsenförmiges Element geführt; wobei ein hülsenförmiges Element eine Stirnfläche aufweist, die bevorzugt mit der Grundfläche des Deckelelements im Bereich um den Durchbruch fluchtet. Die gegenüberliegende Stirnseite der hülsenförmigen Elemente sollte über den Rand des Deckelelements überstehen und so ein bundartiges Element für eine Auflage einer Schraube bilden. Dadurch erfolgt die maximale Kraftübertragung der Befestigung des Gehäuses zumindest überwiegend über die hülsenförmigen Elemente und das Trägerelement wird so gemeinsam mit dem Deckelelement gegen eine Auflagefläche vorgespannt gehalten. Bei gleichen Anzugsdrehmomenten der Schrauben ist auch eine gleichmäßige Vorspannkraft erreichbar.

Die hülsenförmigen Elemente sind bevorzugt aus Metall gebildet und können beim Kunststoffspritzgießen mit in das Polymer eingearbeitet werden, was einem Abbau der Vorspannkräfte entgegen wirkt.

Wie bereits angesprochen, können zwei Drucksensoren in einem Trägerelement aufgenommen und jeweils an einem plattenförmigen Element vorhanden sein. Zu den plattenförmigen Elementen ist dann jeweils ein Kanal geführt, über den der zu messende Druck als Druckkraft am plattenförmigen Element wirkt.

Auf ein plattenförmiges Element kann vorteilhaft ein Drucksensor, der bevorzugt mit Silicium gebildet sein kann, angeordnet werden, mit dem über die Verformung einer eingebrachten Membran eine dem Druck der Pneumatikanlage proportionale Änderung eines elektrischen Messsignals erfasst werden kann.

Plattenförmige Elemente können aus keramischem Werkstoff hergestellt und im Werkstoff des Trägerelements formschlüssig befestigt sein. Dies kann ebenfalls bei der Herstellung durch Kunststoffspritzgießen erreicht werden. Es ist auch eine Kombination form- mit stoffschlüssiger Verbindung möglich. Dabei kann ein plattenförmiges Element zusätzlich verklebt oder mit dem Trägerelement verschweißt werden.

Es besteht die Möglichkeit, eine Öffnung des Trägerelements mit einer drehbar im Trägerelement fixierbaren Kappe durch Formschluss zu verschließen. Dabei kann die Kappe durch eine 90 ° Drehung formschlüssig mit dem Trägerelement verbunden werden und die Kappe dabei eine Öffnung des Trägerelements verschließen. Hierfür ist an der Kappe eine Außenkontur und an der Öffnung eine komplementäre Kontur ausgebildet, die sich im fixierten Zustand hintergreifen.

Ein oder mehrere Hohlräume, die im Trägerelement oder im Inneren des Gehäuses vorhanden sind, sollten mit einem Polymer verfüllt sein. Dies kann ein Polyurethan sein, mit dem ein oder mehrere Hohlräume ausgefüllt werden können. Dadurch kann die Oberfläche, die für eine Krafteinleitung durch einen bei einer Zerstörung eines plattenförmigen Elements ansteigenden Druck zur Verfügung steht, reduziert werden, wodurch die Gefahr einer Zerstörung des gesamten Gehäuses bzw. eines Austritts des unter Druck stehenden Mediums der Pneumatikanlage vermieden zumindest deren Auswirkung deutlich reduziert werden kann.

Günstig ist es, wenn durch das Deckelelement elektrische Kontaktstifte, die bevorzugt in ein Polymer eingebettet mit dem Deckelelement verbunden sind, von der Außenseite bis zu einer am Trägerelement ausgebildeten elektrischen Leiterbahn geführt sind, wenn Träger- und Deckelelement miteinander verbunden sind. Die elektrische Leiterbahn und Drucksensoren sowie ggf. eine integrierte Ansteuer- und Auswerteelektronik können so nach außen elektrisch kontaktiert sein. Die elektrisch leitende Verbindung zwischen den Kontaktstiften und der Leiterbahn kann ohne weiteres Zutun beim Verbinden von Deckel- mit dem Trägerelement hergestellt werden. Kontaktstifte können dabei in Aufnahmen eingeführt werden, die beispielsweise wie Bohrungen ausgebildet sind. An den Rändern oder im Inneren der Aufnahmen ist dann ein elektrisch leitender Werkstoff, der zur elektrischen Leiterbahn gehört oder mit dieser verbunden ist, vorhanden.

Es ist aber auch eine Ausbildung von Kontaktstiften mit Federelement an mindestens einer Seite möglich. Die Federelemente werden dann mit einer Druckkraft gegen die Oberfläche einer Leiterbahn gedrückt um eine sichere elektrisch leitende Verbindung zu erhalten. Die Kontaktstifte können durch Schweißen oder Löten an die elektrischen Leiterbahnen angeschlossen werden.

Es besteht außerdem die Möglichkeit, oberhalb eines auf einem plattenförmigen Element angeordneten Drucksensors ein Schutzkappenelement anzubringen. Dies kann über die gesamte Fläche des jeweiligen plattenförmigen Elements reichen. Es kann als Schutz bei einem Bersten des plattenförmigen Elements dienen und das Gehäuse vor einer Zerstörung oder einer unerwünschten Öffnung schützen.

Die Verbindung des Deckel- mit dem Trägerelement kann zusätzlich durch eine am Trägerelement ausgebildete umlaufende stegförmige Erhebung, die in eine komplementär ausgebildete nutenförmige Vertiefung, die am Deckelelement ausgebildet ist, formschlüssig eingeführt werden kann, erreicht werden. Bevorzugt können dabei die Oberflächen der stegförmigen Erhebung und der nutenförmigen Vertiefung stoffschlüssig und gasdicht miteinander verbunden werden. Eine stoffschlüssige Verbindung kann wieder durch Kleben oder Schweißen hergestellt werden.

Die umlaufende stegförmige Erhebung und die nutenförmige Vertiefung sollten entsprechend der Kraftwirkungsrichtung, die beim Fügen und dabei mit den Schrauben für die Verbindung und Befestigung des Gehäuses ausgeübt wird, parallel zu dieser ausgerichtet sein. Dabei kann auch ein entsprechend angepasster konischer Querschnitt der Erhebung und der Vertiefung gewählt werden, wodurch das Einführen ineinander beim Herstellen der Verbindung von Deckel- mit dem Trägerelement erleichtert werden kann.

Durch den erfindungsgemäßen Aufbau ist es möglich, einen weitestgehend gasdichten Verschluss des Gehäuses, auch beim Bersten eines plattenförmigen Elements, zu sichern. Zumindest kann ein daraus resultierender Druckabfall in einer Pneumatikanlage erheblich reduziert werden, da eine Abdichtung auch durch einzelne oder alle zusammenwirkende Teile des Gehäuses erreicht werden kann.

Außerdem stellt das Gehäuse eine sichere und kostengünstig herstellbare Lösung dar.

Nachfolgend soll die Erfindung beispielhaft näher erläutert werden.

Dabei zeigen:

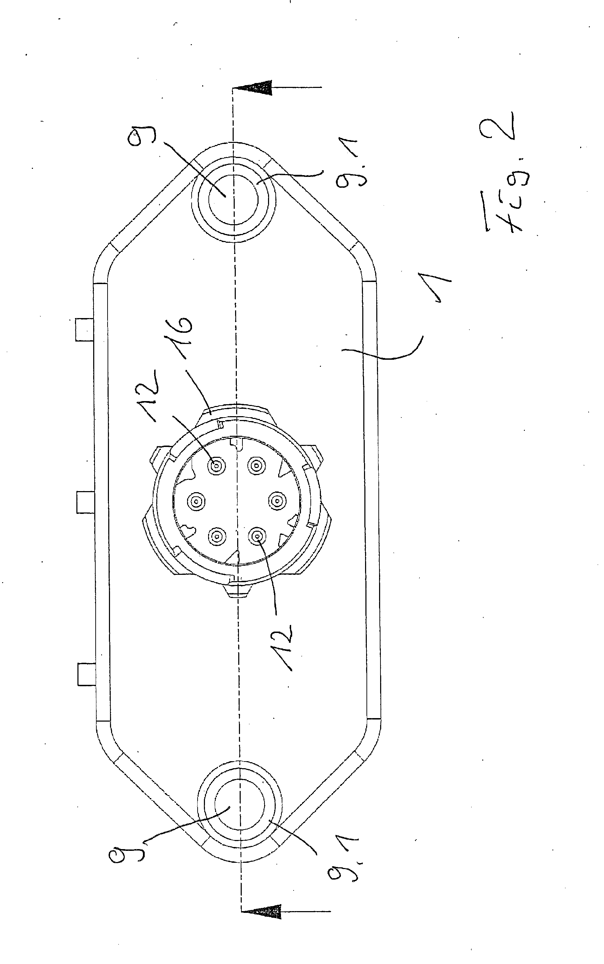

Figur 1 eine Schnittdarstellung eines Beispiels eines erfindungsgemäßen Gehäuses entlang der Linie A-A der in Figur 2 gezeigten Draufsicht und
Figur 2 eine Draufsicht auf das Beispiel nach Figur 1.

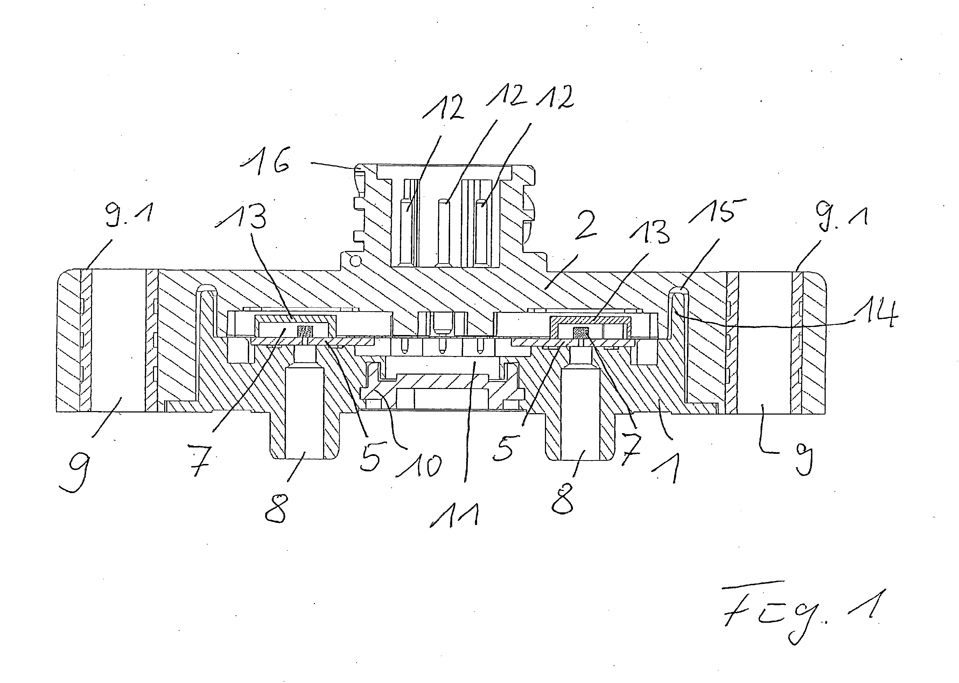

In Figur 1 ist eine Schnittdarstellung durch ein Beispiel eines erfindungsgemäßen Gehäuses gezeigt. Dabei sind ein Deckelelement 2 und ein Trägerelement 1 formschlüssig miteinander verbunden. Für diese Verbindung ist am Deckelement 2 eine nutenförmige Vertiefung 15, die um das Deckelelement 2, der äußeren Randkontur folgend, umlaufend ausgebildet. Am Trägerelement 1 ist eine komplementär ausgebildete stegförmige Erhebung 14 ebenfalls so umlaufend ausgebildet. Beide sind konisch ausgebildet, so dass sie leicht ineinander eingeführt werden können. Die Vertiefung 15 und die Erhebung 14 sind in ihrer Tiefe und Länge so dimensioniert, dass die in die Vertiefung 15 eingeführte Stirnfläche der Erhebung 14, den Grund oder die Basis der Vertiefung 14 nicht berührt, wenn das Deckelelement 2 mit dem Trägerelement 1 richtig verbunden ist. Das Deckelelement 2 und das Trägerelement 1 sind durch Kunststoffspritzgießen aus PBT mit 30 % Glasfasern (Polybuthylenterephtalat) hergestellt worden.

Eine Vertiefung 15 und eine Erhöhung 14 können aber auch am jeweils anderen Element, also eine Vertiefung 15 am Trägerelement 1 und eine Erhöhung 14 dann am Deckelelement 2 ausgebildet sein.

Am Trägerelement 1 sind zwei Kanäle 8 vorhanden, über die das unter Druck stehende Medium der Pneumatik-anlage mit jeweils einem plattenförmigen Element 5 aus einer Keramik, auf dem ein Drucksensor angebracht ist kommuniziert. Je nach Höhe des Innendrucks im jeweiligen Kanal 8 kann sich ein Drucksensor 7 oder ein Teil eines Drucksensors 7 mehr oder weniger verformen. Die jeweilige Verformung oder eine konstante nicht veränderte Verformung, bei konstantem Innendruck, kann mit einem am plattenförmigen Element 5 angebrachten Drucksensor 7 detektiert und als Maß für den jeweiligen Innendruck genutzt werden.

Oberhalb der Drucksensoren 7 ist bei diesem Beispiel ein Schutzkappenelement 12 vorhanden.

Durch das Deckelelement 2 sind elektrische Kontaktstifte 12, die hier in einem Anschlusskörper 16 nach außen und bis zu einer hier nicht dargestellten elektrischen Leiterbahn, die auf einem Bereich des Trägerelements 1 ausgebildet ist, bis ins Innere des Gehäuses geführt sind.

Am Deckelelement 2 sind zwei Durchbrüche 9 für eine Schraubbefestigung ausgebildet, in die jeweils ein hülsenförmiges Element 9.1 aus Aluminium oder einem anderen Metall eingesetzt und beim Kunststoffspritzgießen stoff-und formschlüssig mit dem Deckelelement 2 verbunden ist.

Der äußere Randbereich des Deckelelements 2 der in Richtung auf eine nichtdargestellte Pneumatikbau-gruppe, mit der das Gehäuse verbunden werden soll, weist, die in die gleiche Richtung weisenden äußeren Randbereiche des Trägerelements 1 und die in diese Richtung weisenden Stirnflächen der hülsenförmigen Elemente 9.1 fluchten in einer Ebene miteinander, wenn das Deckelelement 2 und das Trägerelement 1, wie vorab erläutert, miteinander verbunden sind. Erfolgt nun die Befestigung des Gehäuses mittels der Schraubverbindung an der Pneumatikbaugruppe, werden diese Flächenbereiche gleichmäßig mit einer konstanten Kraft gegen die Oberfläche der Pneumatikbaugruppe gepresst. Über die Verbindung des Deckelelements 2 mit dem Trägerelement 1 im Bereich der Erhebung 14 und der Vertiefung 15 ist so keine Kraftübertragung erforderlich.

Zwischen den beiden Kanälen 8 befindet sich bei diesem Beispiel eine Öffnung, die mit einer Kappe 10 verschlossen werden kann. Die Kappe 10 wird dabei einfach um 90 ° gedreht und mit Konturelementen an der Kappe und am Trägerelement 1 im Bereich der Öffnung kann eine sichere formschlüssige Verbindung hergestellt werden.

Zwischen der Kappe 10 und dem Inneren des Trägerelements 1 im Bereich der Öffnung ist eigentlich ein Hohlraum 11 vorhanden. Dieser Hohlraum kann aber möglichst vollständig mit Polyurethan oder einem anderen Polymer ausgefüllt sein, um die Angriffsfläche für einen erhöhten Innendruck, bei einer Beschädigung eines oder beider plattenförmiger Elemente 5 zu reduzieren.

## Patentansprüche

1. Gehäuse für mindestens einen Drucksensor zur Bestimmung des Druckes in Pneumatikanlagen von Fahrzeugen, bei dem an einem Trägerelement (1) an dem ein plattenförmiges Element (5), ein Drucksensor (7) angebracht ist, befestigt ist und
von einem Druckluftanschluss ein Kanal (8) bis zum plattenförmigen Element (5) geführt ist, dabei
das Trägerelement (1) form- und stoffschlüssig mit einem Deckelelement (2) gasdicht verbunden ist und das Deckelelement (2) mit einer Baugruppe der Pneumatikanlage mittels Schraubverbindung an mindestens zwei Positionen befestigbar ist; wobei
zur Durchführung von Schrauben jeweils für eine Schraube ein Durchbruch (9) im Deckelelement (2) ausgebildet ist und die Grundfläche des Deckelelements (2) sowie Bereiche der Grundfläche des Trägerelements (1) fluchtend zueinander ausgerichtet sind und
die Grundfläche des Deckelelements (2) mit den fluchtend ausgerichteten Bereichen der Grundfläche des Trägerelements (1) gemeinsam mittels der Schraubverbindung gegen die Oberfläche der jeweiligen Baugruppe der Pneumatikanlage vorgespannt befestigt sind.

2. Gehäuse nach Anspruch 1, **dadurch gekennzeichnet, dass** durch jeweils einen Durchbruch (9) ein hülsenförmiges Element (9.1) geführt ist; wobei ein hülsenförmiges Element (9.1) eine Stirnfläche aufweist, die bevorzugt mit der Grundfläche des Deckelelements (2) fluchtet.

3. Gehäuse nach Anspruch 1 oder 2, **dadurch gekennzeichnet, dass** am Trägerelement (1) zwei plattenförmige Elemente (5) mit Drucksensor (7) angebracht sind und zu jedem plattenförmigen Element (5) ein Kanal (8) geführt ist.

4. Gehäuse nach einem der vorhergehenden Ansprüche, **dadurch gekennzeichnet, dass** das/die plattenförmige(n) Element(e) (5) aus einem keramischen Werkstoff gebildet ist/sind.

5. Gehäuse nach einem der vorhergehenden Ansprüche, **dadurch gekennzeichnet, dass** eine Öffnung des Trägerelements (1) mit einer drehbar im Trägerelement (1) fixierbaren Kappe (10) durch Formschluss verschließbar ist.

6. Gehäuse nach einem der vorhergehenden Ansprüche, **dadurch gekennzeichnet, dass** eine Öffnung des Trägerelements (1) mit einem Kleber, einer Dichtung und/oder ein Verschlusselement gasdicht verschlossen ist.

7. Gehäuse nach einem der vorhergehenden Ansprüche, **dadurch gekennzeichnet, dass** ein oder mehrere Hohlraum/-räume (11) im Gehäuse mit einem Polymer verfüllt sind.

8. Gehäuse nach einem der vorhergehenden Ansprüche, **dadurch gekennzeichnet, dass** durch das Deckelelement (2) elektrische Kontaktstifte (12), die bevorzugt in ein Polymer eingebettet mit dem Deckelelement (2) verbunden, und von der Außenseite bis zu einer am Trägerelement (1) ausgebildeten elektrischen Leiterbahn geführt sind.

9. Gehäuse nach einem der vorhergehenden Ansprüche, **dadurch gekennzeichnet, dass** oberhalb eines auf einem plattenförmigen Element (1) angeordneten Drucksensors (7) ein Schutzkappenelement (13) angebracht ist.

10. Gehäuse nach einem der vorhergehenden Ansprüche, **dadurch gekennzeichnet, dass** am Trägerelement (1) eine umlaufende stegförmige Erhebung (14) ausgebildet ist, die in eine komplementär ausgebildete nutenförmige Vertiefung (15), die am Deckelelement (2) ausgebildet ist, formschlüssig einführbar ist und bevorzugt dabei die Oberflächen der stegförmigen Erhebung (14) und der nutenförmigen Vertiefung (15) stoffschlüssig und gasdicht miteinander verbunden sind.
